# EUROPEAN PATENT APPLICATION

(11) **EP 4 404 311 A1**
(43) Date of publication of application: **24.07.2024**
(21) Application number: 22869619.1
(22) Date of filing: 31.03.2022
(51) Int. Cl.: H01M 4/70, H01M 50/533, H01M 50/534, H01M 50/536, H01M 50/593

(54) **BATTERY AND METHOD FOR MANUFACTURING BATTERY**

(30) Priority: 16.09.2021 JP 2021151514
(71) Applicant: Vehicle Energy Japan Inc., Ibaraki 312-8505 (JP)
(72) Inventor: EGAWA, Hiroaki, Hitachinaka-shi, Ibaraki 312-8505 (JP)
(74) Representative: Mewburn Ellis LLP
(86) International application number: PCT/JP2022/016973
(87) International publication number: WO 2023/042467

(57) **Abstract**

A battery 1 includes a charge/discharge body 10 including an electrode (a positive electrode 11 and a negative electrode 12) including an electrode tab (a positive electrode tab 11b and a negative electrode tab 12b) and a current collector 20 (a positive electrode current collection plate 21 and a negative electrode current collection plate 22) joined to the electrode tab (the positive electrode tab 11b and the negative electrode tab 12b). The current collector 20 (the positive electrode current collection plate 21 and the negative electrode current collection plate 22) includes a convex joining section (a positive electrode joining section 21f and a negative electrode joining section 22f). The electrode tab (the positive electrode tab 11b and the negative electrode tab 12b) and the joining section (the positive electrode joining section 21f and the negative electrode joining section 22f) are welded.

## Description

### Technical Field

The present invention relates to a battery and a manufacturing method for a battery.

### Background Art

In a battery, conventionally, electric conduction has been achieved by joining an electrode tab of a charge/discharge body and a current collector to each other (see, for example, Patent Literature 1).

### Citation List

### Patent Literature

Patent Literature 1: Japanese Patent Application Laid-Open No. 2015-039713

### Summary of Invention

### Technical Problem

It is demanded to increase conductivity of an electrode tab of a charge/discharge body and a current collector.

### Solution to Problem

In order to solve the problem of the related art described above, a battery of the present invention includes: a charge/discharge body including an electrode including an electrode tab; and a current collector joined to the electrode tab. The current collector includes a convex joining section. The electrode tab and the joining section are welded.

In addition, in order to solve the problem of the related art described above, a manufacturing method for a battery of the present invention includes: a first step of bringing the electrode tab and the joining section into contact; and a second step of welding the electrode tab and the current collector.

### Advantageous Effects of Invention

With the battery of the present invention, it is possible to increase conductivity of the electrode tab and the current collector. With the manufacturing method for the battery of the present invention, it is possible to suppress a welding failure of the electrode tab and the current collector and improve productivity and a yield of the battery.

### Brief Description of Drawings

[Figure 1] Figure 1 is a perspective view showing a battery 1 in a first embodiment.
[Figure 2] Figure 2 is a sectional perspective view showing a periphery of a negative electrode terminal 42 of the battery 1 in the first embodiment.
[Figure 3] Figure 3 is a sectional view showing the periphery of the negative electrode terminal 42 of the battery 1 in the first embodiment.
[Figure 4] Figure 4 is a sectional perspective view showing a periphery of a positive electrode terminal 41 of the battery 1 in the first embodiment.
[Figure 5] Figure 5 is a sectional view showing the periphery of the positive electrode terminal 41 of the battery 1 in the first embodiment.
[Figure 6] Figure 6 is an exploded perspective view showing the battery 1 in the first embodiment.
[Figure 7] Figure 7 is a perspective view showing a charge/discharge body 10 of the battery 1 in the first embodiment and extracting, from the charge/discharge body 10, a portion including a positive electrode tab 11b and a negative electrode tab 12b of the charge/discharge body 10 and showing the portion in a lower part.
[Figure 8] Figure 8 is a sectional view showing a part of the charge/discharge body 10 of the battery 1 in the first embodiment.
[Figure 9] Figure 9 is a sectional view showing a part of a charge/discharge body 110 in a modification of the battery 1 in the first embodiment.
[Figure 10] Figure 10 is a perspective view showing a periphery of a negative electrode current collection plate 22 and the negative electrode tab 12b of the battery 1 in the first embodiment.
[Figure 11] Figure 11 is a perspective view showing a periphery of a positive electrode current collection plate 21 and the positive electrode tab 11b of the battery 1 in the first embodiment.
[Figure 12] Figure 12 is a sectional view showing a positive electrode joining section 21f of the positive electrode current collection plate 21 of the battery 1 in the first embodiment.
[Figure 13] Figure 13 is a sectional view showing a joining section 23f of a positive electrode current collection plate 23 of the battery 1 in a modification 1 of the first embodiment.
[Figure 14] Figure 14 is a sectional view showing a joining section 24f of a positive electrode current collection plate 24 of the battery 1 in a modification 2 of the first embodiment.
[Figure 15] Figure 15 is a sectional view showing a joining section 25f of a positive electrode current collection plate 25 of the battery 1 in a modification 3 of the first embodiment.
[Figure 16] Figure 16 is an exploded perspective view showing a periphery of a negative electrode terminal 42 of the battery 1 in the first embodiment.
[Figure 17] Figure 17 is an exploded perspective view showing a lid 52 and a sealing plug 53 of the battery 1 in the first embodiment.
[Figure 18] Figure 18 is an exploded perspective view showing a periphery of the positive electrode terminal 41 of the battery 1 in the first embodiment.
[Figure 19] Figure 19 is a perspective view showing the periphery of the negative electrode current collection plate 22 in manufacturing of the battery 1 in the first embodiment.
[Figure 20] Figure 20 is a perspective view showing the negative electrode current collection plate 22 and the negative electrode tab 12b before joining in the manufacturing of the battery 1 in the first embodiment.
[Figure 21] Figure 21 is a perspective view showing the negative electrode current collection plate 22 and the negative electrode tab 12b during the joining in the manufacturing of the battery 1 in the first embodiment.
[Figure 22] Figure 22 is a perspective view showing a part of a battery 2 in a second embodiment.
[Figure 23] Figure 23 is a perspective view showing the periphery of the negative electrode current collection plate 22 and a negative electrode tab 212b of the battery 2 in the second embodiment.
[Figure 24] Figure 24 is a perspective view showing a part of a battery 3 in a third embodiment.
[Figure 25] Figure 25 is a perspective view showing the periphery of the negative electrode current collection plate 22 and a negative electrode tab 312b of the battery 3 in the third embodiment.
[Figure 26] Figure 26 is a perspective view showing a part of a battery 4 in a fourth embodiment.
[Figure 27] Figure 27 is a perspective view showing a periphery of a negative electrode current collection plate 122 and a negative electrode tab 412b of the battery 4 in the fourth embodiment.

### Description of Embodiments

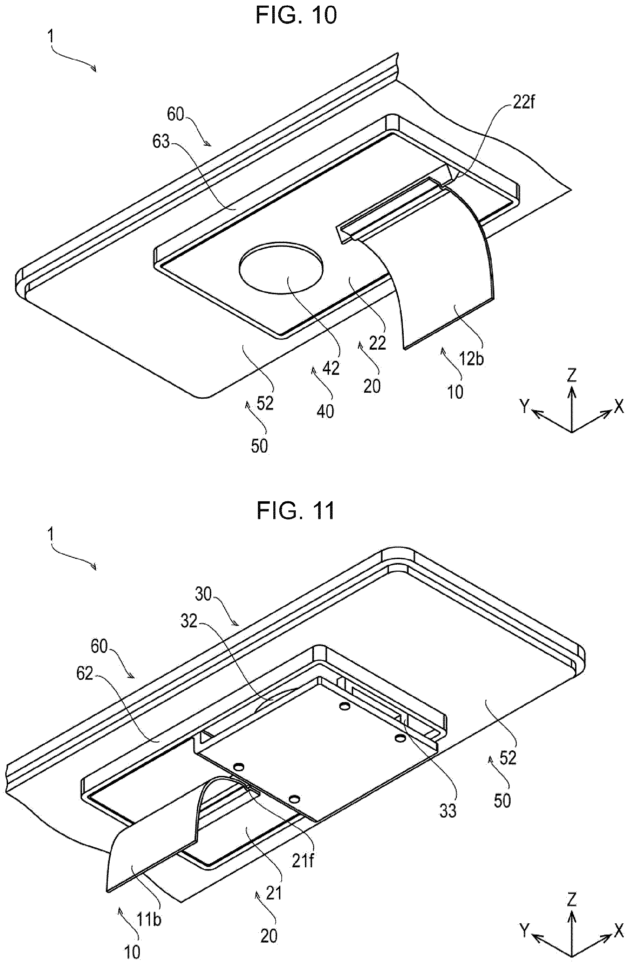

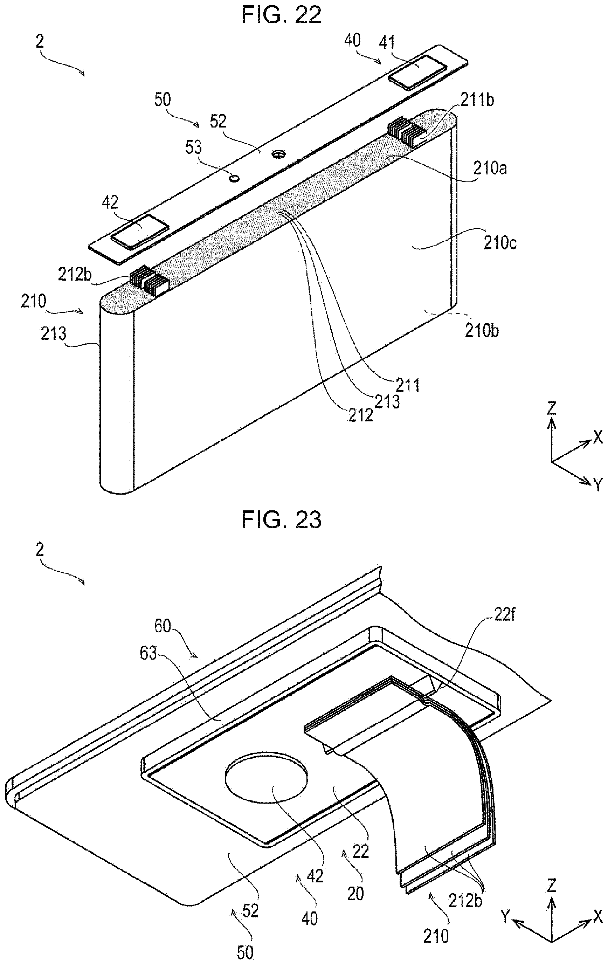

Each of embodiments of the present invention is explained with reference to the drawings. To facilitate understanding of each of the embodiments, sizes and ratios of constituent members are sometimes exaggerated in the drawings. In the drawings, an electrode tab of a charge/discharge body is illustrated shorter than actual length. Electrodes shown in Figure 10, Figure 11, Figure 23, Figure 25, and Figure 27 are shown in a state in which the electrodes are deformed into a convex shape along joining sections of current collection plates. When being welded to the joining sections of the current collection plates, the electrodes are deformed into the convex shape along the joining sections of the current collection plates. On the other hand, after being welded to the joining sections of the current collection plates, portions other than portions welded to the joining sections of the current collection plates hang down with the own weight of the electrodes, whereby the deformation into the convex shape is sometimes eliminated. Electrode tabs shown in Figure 23, Figure 25, and Figure 27 are shown in smaller numbers compared with electrode tabs shown in Figure 22, Figure 24, and Figure 26 corresponding thereto. In each of the embodiments, the same reference numerals and signs are given to the same components and redundant explanation of the components is omitted. In each of the embodiments, a left-handed XYZ orthogonal coordinate system in which an X axis, a Y axis, and a Z axis are set as coordinate axes is used. Arrows of the axes of the X axis, the Y axis, and the Z axis indicate positive directions of the coordinate axes. The X axis is a coordinate axis in a longitudinal direction of a rectangular parallelepiped battery. The Y axis is a coordinate axis in a latitudinal direction of the battery. The Z axis is a coordinate axis in a height direction of the battery. A plane formed by the X axis and the Y axis is referred to as an XY plane, a plane formed by the Y axis and the Z axis is referred to as a YZ plane, and a plane formed by the X axis and the Z axis is referred to as an XZ plane. However, a positional relation represented by the XYZ orthogonal coordinate system is only a relative positional relation.

### [First Embodiment]

### (Configuration of battery 1 in first embodiment)

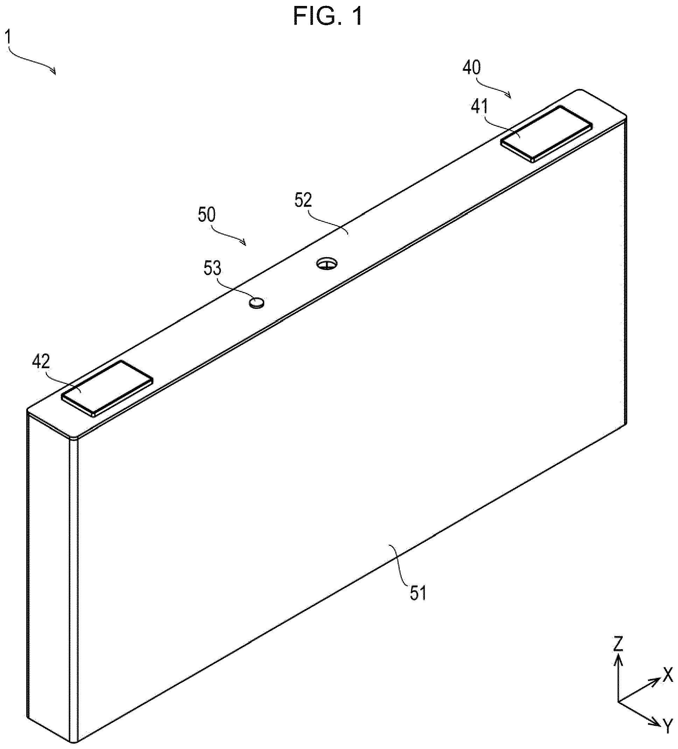

A configuration of a battery 1 is explained with reference to Figure 1 to Figure 18.

The battery 1 includes, for example, as shown in Figure 1 to Figure 5, a charge/discharge body 10 that charges and discharges electricity, a current collector 20 coupled to the charge/discharge body 10, a current blocker 30 coupled to the current collector 20, an external terminal 40 coupled to the current collector 20 or the current blocker 30, and an exterior body 50 in or to which the constituent members of the battery 1 are housed or attached. The battery 1 includes an insulator 60 that insulates the constituent members of the battery 1 and the exterior body 50 and a sealing body 70 that seals the constituent members of the battery 1 and the exterior body 50.

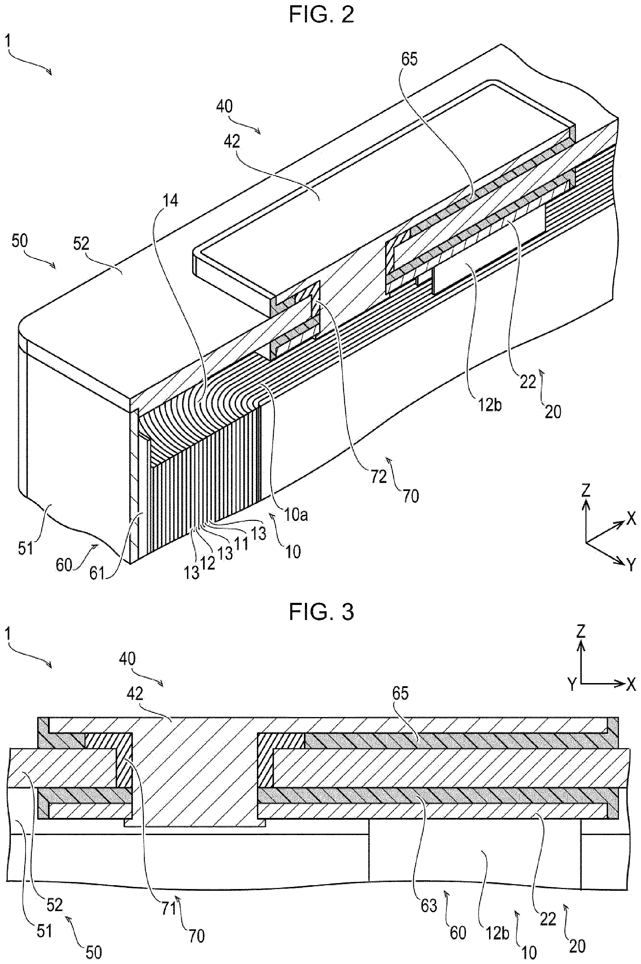

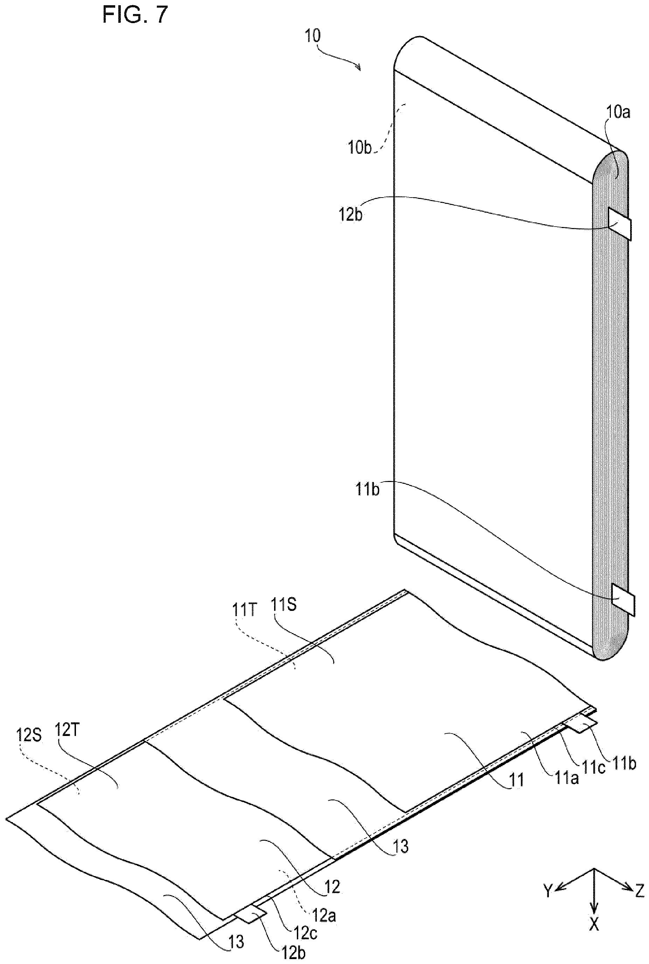

The charge/discharge body 10 charges and discharges electricity. The charge/discharge body 10 shown in Figure 2 to Figure 8 includes a positive electrode 11, a negative electrode 12, separators 13 (insulating members), and an electrolyte 14. The electrodes (the positive electrode 11 and the negative electrode 12) include electrode tabs (a positive electrode tab 11b and a negative electrode tab 12b). As shown in Figure 7, the charge/discharge body 10 is configured by winding, in a rectangular parallelepiped shape, the constituent members stacked in the order of the positive electrode 11, the separator 13, the negative electrode 12, and the separator 13.

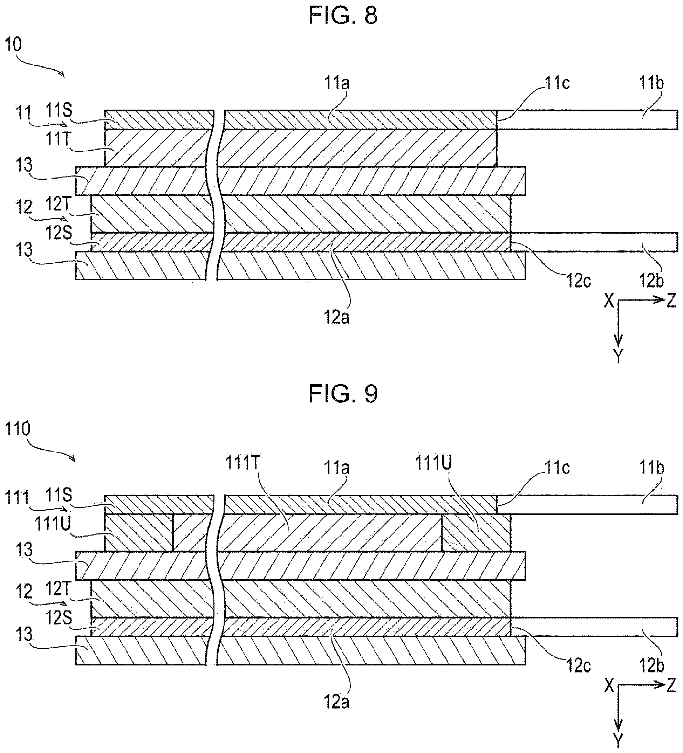

The positive electrode 11 includes, for example, as shown in Figure 7 and Figure 8, a long positive electrode current collection layer 11S and a positive electrode active material layer 11T joined to the positive current collection layer 11S. The positive electrode current collection layer 11S includes a current collection section 11a and the positive electrode tab 11b. The positive electrode active material layer 11T is joined to the current collection section 11a. The positive electrode active material layer 11T faces, for example, the entire area extending in the latitudinal direction of the current collection section 11a (the Z-axis direction).

For example, as shown in Figure 7 and Figure 8, the positive electrode tab 11b projects in the latitudinal direction of the current collection section 11a from a side edge 11c extending in the longitudinal direction of the current collection section 11a. The positive electrode tab 11b is formed integrally with the current collection section 11a. One positive electrode tab 11b is formed in one current collection section 11a. The current collection section 11a is formed by, for example, aluminum or an aluminum alloy.

The positive electrode active material layer 11T includes a positive electrode active material, a binder, a conductive auxiliary agent, and the like formed by a lithium-containing complex oxide. As the lithium-containing complex oxide, for example, a metal element such as nickel (Ni), cobalt (Co), or manganese (Mn) and lithium (Li) are used.

The negative electrode 12 includes, for example, as shown in Figure 7 and Figure 8, a long negative electrode current collection layer 12S and a negative electrode active material layer 12T joined to the negative electrode current collection layer 12S. The negative electrode current collection layer 12S includes a current collection section 12a and the negative electrode tab 12b. The current collection section 12a of the negative electrode 12 is longer in width in the latitudinal direction (the Z-axis direction) compared with the current collection section 11a of the positive electrode 11. Both the ends in the latitudinal direction of the current collection section 11a of the positive electrode 11 are located via the separator 13 within a range extending in the latitudinal direction of the current collection section 12a of the negative electrode 12. The negative electrode active material layer 12T is joined to the current collection section 12a. The negative electrode active material layer 12T faces, for example, the entire area extending in the latitudinal direction of the current collection section 12a.

For example, as shown in Figure 7 and Figure 8, the negative electrode tab 12b projects in the latitudinal direction of the current collection section 12a from a side edge 12c extending in the longitudinal direction of the current collection section 12a. The negative electrode tab 12b projects in the same direction as the direction of the positive electrode tab 11b of the positive electrode 11 in a state in which the negative electrode tab 12b is stacked with the positive electrode 11 via the separator 13. The negative electrode tab 12b is separated from the positive electrode tab 11b of the positive electrode 11 in the state in which the negative electrode tab 12b is stacked with the positive electrode 11 via the separator 13. The negative electrode tab 12b is formed integrally with the current collection section 12a. One negative electrode tab 12b is formed in one current collection section 12a. The current collection section 12a is formed by, for example, copper or a copper alloy.

The negative electrode active material layer 12T includes a negative electrode active material, a binder, a conductive auxiliary agent, and the like formed by a carbon-based material. As the carbon-based material, for example, graphite is used.

For example, as shown in Figure 7 and Figure 8, the separator 13 (an insulator) allows lithium ions to pass while insulating the positive electrode 11 and the negative electrode 12. The separator 13 is formed long. The separator 13 is long in the width in the latitudinal direction (the Z-axis direction) compared with the current collection section 11a of the positive electrode 11 and the current collection section 12a of the negative electrode 12. Both the ends in the latitudinal direction of the current collection section 11a of the positive electrode 11 are located and both ends in the latitudinal direction of the current collection section 12a of the negative electrode 12 are located within a range extending in the latitudinal direction of the separator 13. The separator 13 is made of a porous material. As the separator 13, polyethylene (PE) or polypropylene (PP) is used. A heat resistant insulating member may be used instead of the separator 13. As the heat resistant insulating member, for example, ceramics is used. The configuration explained above is a so-called separator-less configuration.

The electrolyte 14 is equivalent to a so-called electrolytic solution. The electrolyte 14 includes an organic solvent, a supporting electrolyte, and an additive. As the organic solvent, for example, carbonic ester is used. As the supporting electrolyte, for example, lithium salt is used.

A charge/discharge body 110 that is a modification of the charge/discharge body 10 is explained with reference to Figure 9. In the charge/discharge body 110, a configuration of a positive electrode 111 is different from the configuration of the positive electrode 11 in the first embodiment. In a configuration of the charge/discharge body 110, the same reference numerals and signs are added to the same components as the components of the charge/discharge body 10 and explanation of the components is omitted. A positive electrode active material layer 111T of the charge/discharge body 110 faces a portion excluding both the ends extending in the latitudinal direction of the current collection section 11a (the Z-axis direction). A heat resistant insulating layer 111U of the charge/discharge body 110 is joined to both the ends extending in the latitudinal direction of the current collection section 11a and a proximal end portion of the positive electrode tab 11b. The heat resistance insulating layer 111U includes, for example, ceramics.

A current collector 20 is coupled to the positive electrode tab 11b and the negative electrode tab 12b of the charge/discharge body 10. The current collector 20 shown in Figure 2 to Figure 5, Figure 10 to Figure 12, Figure 16, and Figure 18 includes a positive electrode current collection plate 21 and a negative electrode current collection plate 22.

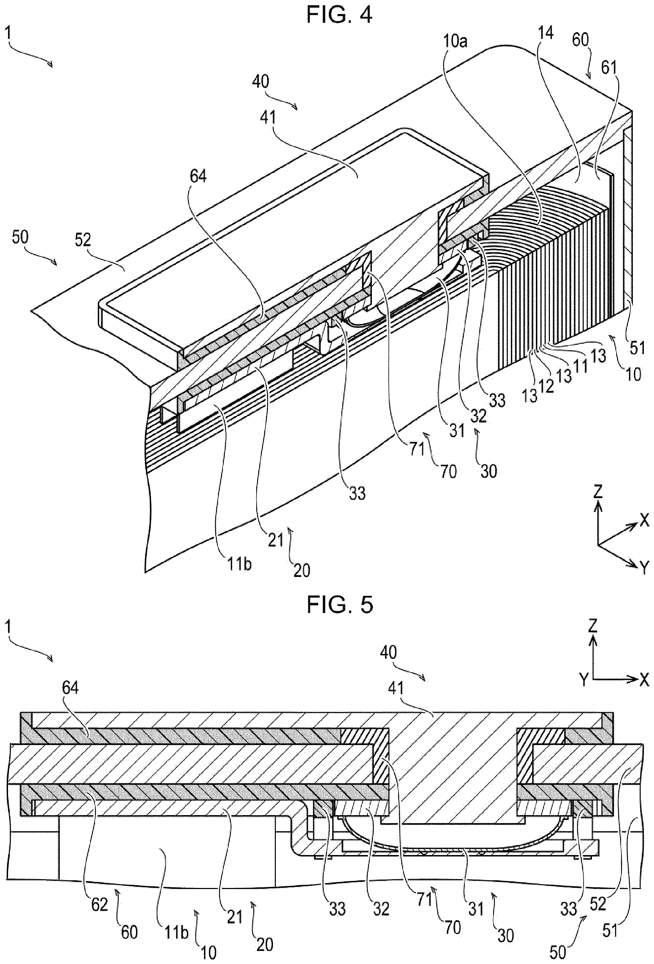

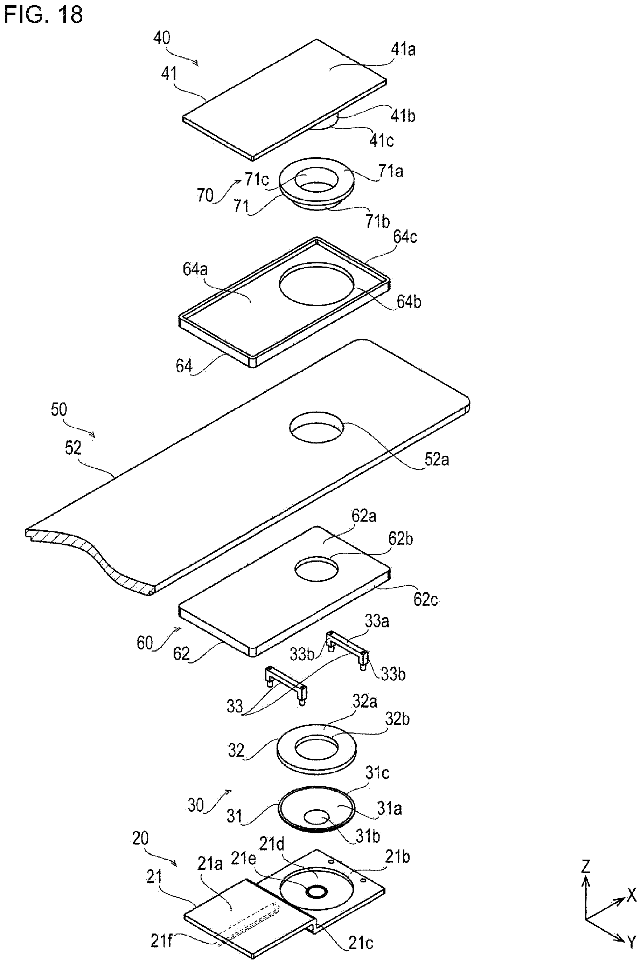

For example, as shown in Figure 4 and Figure 5, the positive electrode current collection plate 21 causes the positive electrode tab 11b of the charge/discharge body 10 and a positive electrode terminal 41 to conduct via the current blocker 30. The positive electrode current collection plate 21 includes, for example, as shown in Figure 18, a rectangular parallelepiped plate-like first base section 21a, a rectangular parallelepiped plate-like second base section 21b, and a coupling section 21c that couples the first base section 21a and the second base section 21b step-wise at different heights. A recess 21d where the second base section 21b is formed thin is formed on the upper surface (the surface on the Z-axis positive direction side) of the second base section 21b. A fragile section 21e, which is a fragile portion hollowed in a ring shape, is formed in the center of the recess 21d. A convex positive electrode joining section 21f projecting downward (in the Z-axis negative direction) is formed in the first base section 21a. The positive electrode joining section 21f is formed in a triangular shape. The positive electrode joining section 21f extends in the longitudinal direction of the charge/discharge body 10 (the X-axis direction) while facing the charge/discharge body 10. The positive electrode joining section 21f has higher rigidity in a stacking direction of the positive electrode tab 11b and the positive electrode current collection plate 21 (the Z-axis direction) than the positive electrode tab 11b. The distal end of the positive electrode joining section 21f and the positive electrode tab 11b are welded. The positive electrode tab 11b is pressed toward the positive electrode joining section 21f when being welded to the positive electrode joining section 21f to thereby be deformed to extend along the convex positive electrode joining section 21f. The positive electrode current collection plate 21 is formed by, for example, aluminum or an aluminum alloy.

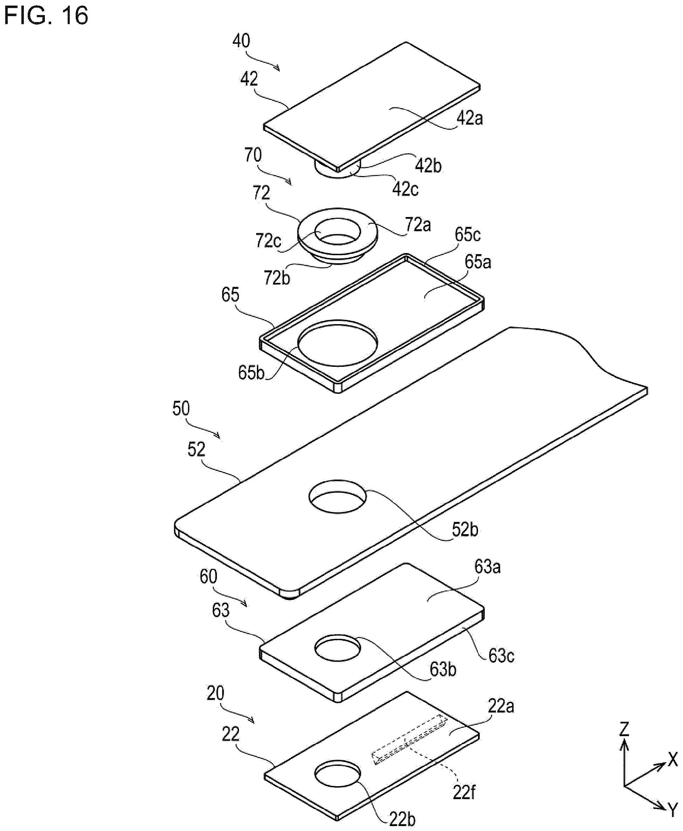

For example, as shown in Figure 2 and Figure 3, the negative electrode current collection plate 22 causes the negative electrode tab 12b of the charge/discharge body 10 and a negative electrode terminal 42 to conduct. The negative electrode current collection plate 22 includes, for example, as shown in Figure 16, a rectangular parallelepiped plate-like base section 22a and an insertion hole 22b piercing through the base section 22a. An insertion section 42b of the negative electrode terminal 42 is inserted into the insertion hole 22b of the negative electrode current collection plate 22. A convex negative electrode joining section 22f projecting downward (in the Z-axis negative direction) is formed in the base section 22a. The negative electrode joining section 22f is formed in a triangular shape. The negative electrode joining section 22f extends in the longitudinal direction of the charge/discharge body 10 (the X-axis direction) while facing the charge/discharge body 10. The negative electrode joining section 22f has higher rigidity in a stacking direction of the negative electrode tab 12b and the negative electrode current collection plate 22 (the Z-axis direction) than the negative electrode tab 12b. The distal end of the negative electrode joining section 22f and the negative electrode tab 12b are welded. The negative electrode tab 12b is pressed toward the negative electrode joining section 22f when being welded to the negative electrode joining section 22f to thereby be deformed to extend along the convex negative electrode joining section 22f. The negative electrode current collection plate 22 is formed by, for example, copper or a copper alloy.

The current blocker 30 is coupled to the current collector 20 and causes the current collector 20 and the positive electrode terminal 41 to conduct. The current blocker 30 shown in Figure 4, Figure 5, and Figure 18 includes a diaphragm 31, a conductive member 32, and a pair of supporting tables 33.

The diaphragm 31 includes, for example, as shown in Figure 18, a curved cylindrical main body section 31a, a disc-shaped first joining section 31b provided on the distal end side (the Z-axis negative direction side) of the main body section 31a, and a ring-like second joining section 31c provided on the proximal end side (the Z-axis positive direction side) of the main body section 31a. The first joining section 31b is joined to the recess 21d of the positive electrode current collection plate 21. The second joining section 31c is joined to the conductive member 32. The diaphragm 31 is formed by, for example, aluminum or an aluminum alloy.

For example, as shown in Figure 18, the conductive member 32 is formed in a cylindrical shape. A positive electrode side first insulating plate 62 is joined to the upper surface (the surface on the Z axis positive direction side) of the conductive member 32. The second joining section 31c of the diaphragm 31 is joined to the peripheral edge of the lower surface (the surface on the Z-axis negative direction side) of the conductive member 32. The conductive member 32 is formed by, for example, aluminum or an aluminum alloy.

The supporting tables 33 include, for example, as shown in Figure 18, rectangular parallelepiped main body sections 33a extending in the latitudinal direction of the battery 1 (the Y-axis direction) and leg sections 33b extending downward (in the Z-axis negative direction) from both the sides in the longitudinal direction of the main body sections 33a (the Y-axis direction). One supporting table 33 is provided at each of both the ends in the longitudinal direction of the battery 1 of the diaphragm 31 (the X-axis direction). The main body sections 33a are attached to the positive electrode side first insulating plate 62. The leg sections 33b are attached to the second base section 21b of the positive electrode current collection plate 21. The supporting tables 33 are formed by, for example, insulating resin.

The external terminal 40 is coupled to the current collector 20 or the current blocker 30. The external terminal 40 shown in Figure 1 to Figure 6, Figure 10, Figure 16, and Figure 18 includes the positive electrode terminal 41 and the negative electrode terminal 42.

For example, as shown in Figure 5, the positive electrode terminal 41 is coupled to the conductive member 32 of the current blocker 30. The positive electrode terminal 41 includes, for example, as shown in Figure 18, a rectangular parallelepiped plate-like base section 41a, a columnar insertion section 41b projecting downward (in the Z-axis negative direction) from the base section 41a, and a cylindrical joining section 41c projecting downward (the Z-axis negative direction) from the peripheral edge of the base section 41a.

For example, as shown in Figure 18, the base section 41a is in contact with a base section 64a of a positive electrode side second insulating plate 64. The insertion section 41b is inserted into an insertion hole 64b of the positive electrode side second insulating plate 64, a positive electrode side insertion hole 52a of a lid 52, an insertion hole 62b of the positive electrode side first insulating plate 62, and an insertion hole 32b of the conductive member 32.

For example, as shown in Figure 18, the joining section 41c projects downward (in the Z-axis negative direction) from the insertion hole 32b of the conductive member 32 and is expanded outward in the radial direction and joined to the conductive member 32. That is, the joining section 41c is caulked at the peripheral edge of the insertion hole 32b of the conductive member 32. Further, the joining section 41c is welded at the peripheral edge of the insertion hole 32b of the conductive member 32. The positive electrode terminal 41 is formed by, for example, aluminum or an aluminum alloy.

For example, as shown in Figure 3, the negative electrode terminal 42 is coupled to the negative electrode current collection plate 22. The negative electrode terminal 42 includes, for example, as shown in Figure 16, a rectangular parallelepiped plate-like base section 42a, a columnar insertion section 42b projecting downward (in the Z-axis negative direction) from the base section 42a, and a cylindrical joining section 42c projecting downward (in the Z-axis negative direction) from the peripheral edge of the base section 42a.

For example, as shown in Figure 16, the base section 42a is in contact with a base section 65a of a negative electrode side second insulating plate 65. The insertion section 42b is inserted into an insertion hole 65b of the negative electrode side second insulating plate 65, a negative electrode side insertion hole 52b of the lid 52, an insertion hole 63b of a negative electrode side first insulating plate 63, and the insertion hole 22b of the negative electrode current collection plate 22.

For example, as shown in Figure 16, the joining section 42c projects downward from the insertion hole 22b of the negative electrode current collection plate 22 and is expanded outward in the radial direction and joined to the negative electrode current collection plate 22. That is, the joining section 42c is caulked at the peripheral edge of the insertion hole 22b of the negative electrode current collection plate 22. Further, the joining section 42c is welded to the peripheral edge of the insertion hole 22b of the negative electrode current collection plate 22. The negative electrode terminal 42 is formed by, for example, copper or a copper alloy.

The constituent members of the battery 1 are housed in or attached to the exterior body 50. The exterior body 50 shown in Figure 1 to Figure 6, Figure 10, Figure 11, and Figure 16 to Figure 18 includes a container 51, the lid 52, and a sealing plug 53.

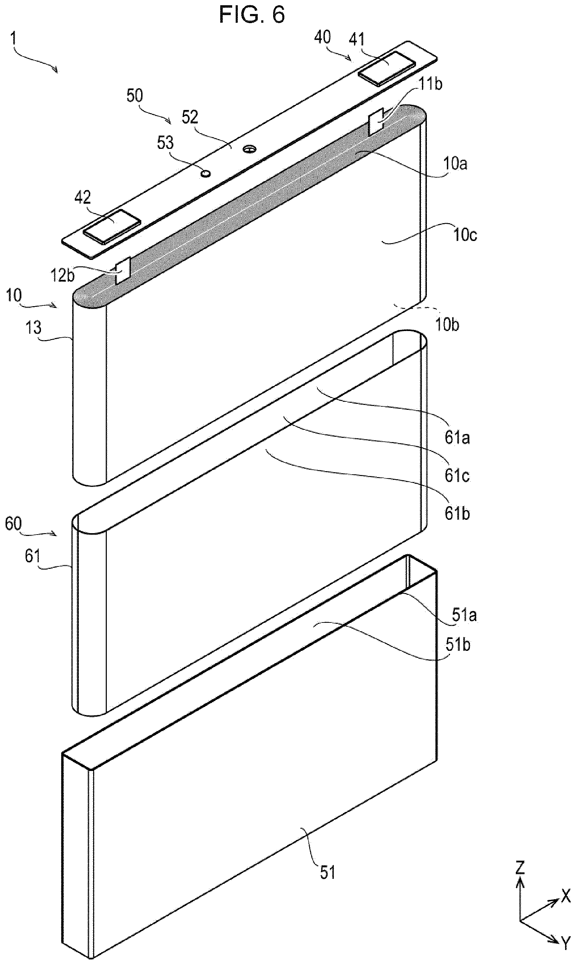

For example, as shown in Figure 2 and Figure 6, the container 51 houses the charge/discharge body 10 and the like covered by an insulation cover 61. The container 51 is configured by a rectangular parallelepiped metal can. The container 51 includes, for example, as shown in Figure 6, an opening 51a opened in the longitudinal direction and an enclosure section 51b stretching to the opening 51a. The container 51 is formed by, for example, aluminum or an aluminum alloy.

For example, as shown in Figure 2 and Figure 6, the lid 52 seals the opening 51a of the container 51. The lid 52 faces, in the charge/discharge body 10, one side section 10a (a side section) adjacent to the positive electrode 11, the separators 13, and the negative electrode 12. The lid 52 is formed by a long plate-shaped metal plate. In the lid 52, the positive electrode side insertion hole 52a configured by a circular through-hole is formed on one end side in the longitudinal direction. The insertion section 41b of the positive electrode terminal 41 is inserted into the positive electrode side insertion hole 52a. In the lid 52, the negative electrode side insertion hole 52b configured by a circular through-hole is formed on the other end side in the longitudinal direction. The insertion section 42b of the negative electrode terminal 42 is inserted into the negative electrode side insertion hole 52b.

In the lid 52, a liquid injection hole 52c configured by a circular through-hole is formed between the positive electrode side insertion hole 52a and the negative electrode side insertion hole 52b. The electrolyte 14 is injected from the lid 52 toward the container 51 via the liquid injection hole 52c. the insertion section 53b of the sealing plug 53 is inserted into the liquid injection hole 52c. In the lid 52, a cleavage valve 52d is formed in the center in the longitudinal direction. The lid 52 is welded to the container 51. The lid 52 is formed by, for example aluminum or an aluminum alloy.

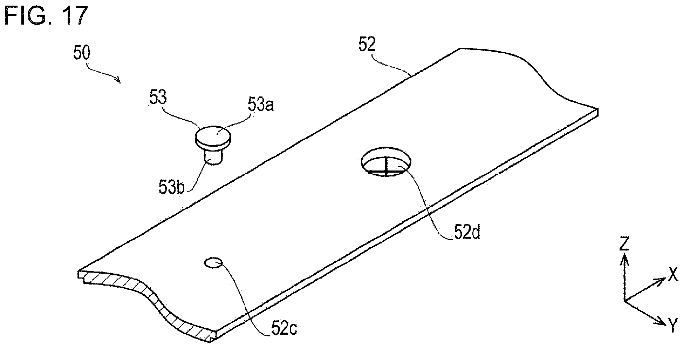

For example, as shown in Figure 17, the sealing plug 53 seals the liquid injection hole 52c of the lid 52. The sealing plug 53 is formed in a columnar shape. The sealing plug 53 includes a head section 53a having a relatively large outer diameter and an insertion section 53b continuing to the head section 53a and having a relatively small outer diameter. The head section 53a of the sealing plug 53 is welded to the lid 52. The sealing plug 53 is formed by, for example, aluminum or an aluminum alloy.

The insulator 60 insulates the constituent members of the battery 1 and the exterior body 50. The insulator 60 shown in Figure 2 to Figure 6, Figure 10, Figure 11, Figure 16, and Figure 18 includes the insulation cover 61, the positive electrode side first insulating plate 62, the negative electrode side first insulating plate 63, the positive electrode side second insulating plate 64, and the negative electrode side second insulating plate 65.

For example, as shown in Figure 6, the insulation cover 61 covers and insulates the charge/discharge body 10. The insulation cover 61 includes a pair of side surfaces (a first side surface 61a and a second side surface 61b) facing each other and an opening 61c that exposes the one side section 10a of the charge/discharge body 10 between the first side surface 61a and the second side surface 61b. The insulation cover 61 covers surfaces other than one surface of the one side section 10a of the charge/discharge body 10. That is, the insulation cover 61 covers the other side section 10b facing the one side section 10a of the charge/discharge body 10 and an outer circumferential section 10c located between the one side section 10a and the other side section 10b of the charge/discharge body 10. The insulation cover 61 is formed in a pentahedron shape by folding a polyhedral sheet in a box shape. The insulation cover 61 is formed by, for example, polypropylene.

For example, as shown in Figure 5, the positive electrode side first insulating plate 62 insulates the positive electrode current collection plate 21 and the conductive member 32 from the lid 52. The positive electrode side first insulating plate 62 includes, for example, as shown in Figure 18, a rectangular parallelepiped plate-like base section 62a, an insertion hole 62b piercing through the base section 62a, and a projection 62c surrounding the side edge of the base section 62a in an annular shape and projecting in a direction away from the lid 52. In the positive electrode side first insulating plate 62, the positive electrode current collection plate 21, the conductive member 32, and the like are housed in a space formed by the base section 62a and the projection 62c. The insertion section 41b of the positive electrode terminal 41 is inserted into the insertion hole 62b. The positive electrode side first insulating plate 62 is formed by, for example, insulating resin.

For example, as shown in Figure 3, the negative electrode side first insulating plate 63 insulates the negative electrode current collection plate 22 and the lid 52. The negative electrode side first insulating plate 63 includes, for example, as shown in Figure 16, a rectangular parallelepiped plate-like base section 63a, an insertion hole 63b piercing through the base section 63a, and a projection 63c surrounding the side edge of the base section 63a in an annular shape and projecting in a direction away from the lid 52. In the negative electrode side first insulating plate 63, the negative electrode current collection plate 22 is housed in a space formed by the base section 63a and the projection 63c. The insertion section 42b of the negative electrode terminal 42 is inserted into the insertion hole 63b. The negative electrode side first insulating plate 63 is formed by, for example, insulating resin.

For example, as shown in Figure 5, the positive electrode side second insulating plate 64 insulates the positive electrode terminal 41 and the lid 52. The positive electrode side second insulating plate 64 includes, for example, as shown in Figure 18, a rectangular parallelepiped-plate like base section 64a, an insertion hole 64b piercing through the base section 64a, and a projection 64c surrounding the side edge of the base section 64a in an annular shape and projecting in a direction away from the lid 52. In the positive electrode side second insulating plate 64, the positive electrode terminal 41 is housed in a space formed by the base section 64a and the projection 64c. The insertion section 41b of the positive electrode terminal 41 is inserted into the insertion hole 64b. The positive electrode side second insulating plate 64 is formed by, for example, insulating resin.

For example, as shown in Figure 3, the negative electrode side second insulating plate 65 insulates the negative electrode terminal 42 and the lid 52. The negative electrode side second insulating plate 65 includes, for example, as shown in Figure 16, a rectangular parallelepiped plate-like base section 65a, an insertion hole 65b piercing through the base section 65a, and a projection 65c surrounding the side edge of the base section 65a in an annular shape and projecting in a direction away from the lid 52. In the negative electrode side second insulating plate 65, the negative electrode terminal 42 is housed in a space formed by the base section 65a and the projection 65c. The insertion section 42b of the negative electrode terminal 42 is inserted into the insertion hole 65b. The negative electrode side second insulating plate 65 is formed by, for example, insulating resin.

The sealing body 70 seals the constituent members of the battery 1 and the exterior body 50. The sealing body 70 shown in Figure 2 to Figure 5, Figure 16, and Figure 18 includes a positive electrode side gasket 71 and a negative electrode side gasket 72.

For example, as shown in Figure 5, the positive electrode side gasket 71 insulates the positive electrode side second insulating plate 64 and the lid 52. The positive electrode side gasket 71 is formed in a cylindrical shape. The positive electrode side gasket 71 includes, for example, as shown in Figure 18, a first insertion section 71a having a relatively large outer diameter, a second insertion section 71b continuing to the first insertion section 71a and having a relatively small outer diameter, and an insertion hole 71c piercing through the first insertion section 71a and the second insertion section 71b. The first insertion section 71a of the positive electrode side gasket 71 is inserted into the insertion hole 64b of the positive electrode side second insulating plate 64. The second insertion section 71b of the positive electrode side gasket 71 is inserted into the positive electrode side insertion hole 52a of the lid 52. The insertion section 41b of the positive electrode terminal 41 is inserted into the insertion hole 71c. The positive electrode side gasket 71 is formed by, for example, rubber having insulation and elasticity.

For example, as shown in Figure 3, the negative electrode side gasket 72 insulates the negative electrode side second insulating plate 65 and the lid 52. The negative electrode side gasket 72 is formed in a cylindrical shape. The negative electrode side gasket 72 includes, for example, as shown in Figure 16, a first insertion section 72a having a relatively large outer diameter, a second insertion section 72b continuing to the first insertion section 72a and having a relatively small outer diameter, and an insertion hole 72c piercing through the first insertion section 72a and the second insertion section 72b. The first insertion section 72a of the negative electrode side gasket 72 is inserted into the insertion hole 65b of the negative electrode side second insulating plate 65. The second insertion section 72b of the negative electrode side gasket 72 is inserted into the negative electrode side insertion hole 52b of the lid 52. The insertion section 42b of the negative electrode terminal 42 is inserted into the insertion hole 72c. The negative electrode side gasket 72 is formed by, for example, rubber having insulation and elasticity.

### (Manufacturing method for battery 1 in first embodiment)

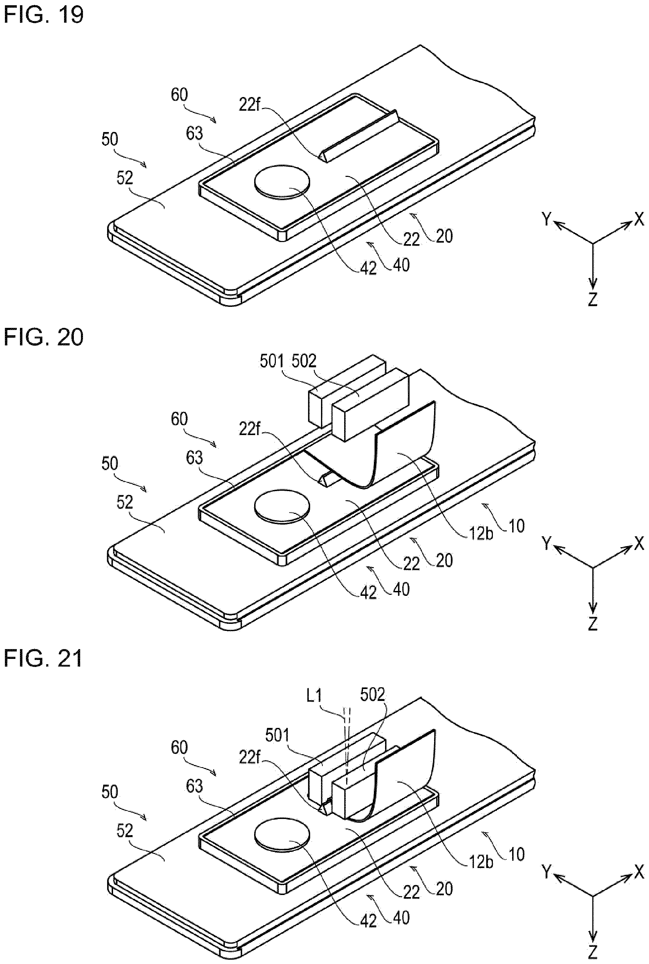

A manufacturing method for the battery 1 is explained with reference to Figure 19 to Figure 21. In the explanation of the manufacturing method for the battery 1 in the first embodiment, only a manufacturing process specific to the battery 1 is explained. Explanation of the same manufacturing process as the manufacturing process for the general battery is omitted. Specifically, about the manufacturing method for the battery 1, a manufacturing method for welding an electrode tab (the negative electrode tab 12b) to a current collection plate (the negative electrode current collection plate 22) is explained. A manufacturing method for welding the positive electrode tab 11b to the positive electrode current collection plate 21 is the same as the manufacturing method for welding the negative electrode tab 12b to the negative electrode current collection plate 22. Therefore, explanation of the manufacturing method for welding the positive electrode tab 11b to the positive electrode current collection plate 21 is omitted.

The manufacturing method specific to the battery 1 is a first step of bringing the negative electrode tab 12b and the negative electrode current collection plate 22 into contact shown in Figure 19 to Figure 21 and a second step of welding the negative electrode tab 12b and the negative electrode current collection plate 22 shown in Figure 21.

As shown in Figure 19 to Figure 21, in the first step, the negative electrode tab 12b and the negative electrode current collection plate 22 are brought into contact. In the first step, the negative electrode tab 12b is brought close to the negative electrode current collection plate 22 from the Z-axis negative direction side and the negative electrode tab 12b is brought into contact with the negative electrode joining section 22f of the negative electrode current collection plate 22. Here, in the first step, the negative electrode tab 12b and sides of both ends of the negative electrode joining section 22f of the negative electrode current collection plate 22 are pressed against each other using a pair of pressing members (a first pressing member 501 and a second pressing member 502). The first pressing member 501 and the second pressing member 502 are respectively formed in rectangular parallelepiped shapes and have sufficient rigidity. Specifically, the first pressing member 501 and the second pressing member 502 are configured from, for example, metal blocks. When the negative electrode tab 12b and the sides of both the ends of the negative electrode joining section 22f of the negative electrode current collection plate 22 are pressed against each other by the first pressing member 501 and the second pressing member 502, the negative electrode tab 12b is pulled to the sides of both the ends of the negative electrode joining section 22f. That is, when the negative electrode tab 12b is pressed along the sides of both the ends (sides of both ends in the Y-axis direction) of the negative electrode joining section 22f in a state in which the negative electrode tab 12b is set in contact with the negative electrode joining section 22f, tension in both positive and negative directions of the Y axis centering on the negative electrode joining section 22f is applied to the negative electrode tab 12b. As a result, the negative electrode tab 12b is pressed against the negative electrode joining section 22f. A portion of the negative electrode tab 12b pressed against the negative electrode joining section 22f is deformed into a convex shape along the shape of the negative electrode joining section 22f. The negative electrode tab 12b and the negative electrode joining section 22f of the negative electrode current collection plate 22 come into contact in an adhering state.

As shown in Figure 21, in the second step, the negative electrode tab 12b and the negative electrode current collection plate 22 are welded. In the second step, in a state in which the pressing from the negative electrode tab 12b against the negative electrode joining section 22f of the negative electrode current collection plate 22 by the first step is maintained, the negative electrode tab 12b and the negative electrode joining section 22f of the negative electrode current collection plate 22 are welded by a laser beam L1. The negative electrode joining section 22f extends in the longitudinal direction of the battery 1 (the X-axis direction). Therefore, in the second step, scanning is performed in the X-axis direction by the laser beam L1 to linearly continuously weld the negative electrode tab 12b and the negative electrode joining section 22f of the negative electrode current collection plate 22. Note that, in the second step, scanning may be performed in the X-axis direction by the laser beam L1 to intermittently weld the negative electrode tab 12b and the negative electrode joining section 22f of the negative electrode current collection plate 22. Thereafter, in the second step, the first pressing member 501 and the second pressing member 502 are retracted from the negative electrode tab 12b.

### (Effects of battery 1 and manufacturing method for battery 1 in first embodiment)

Effects of the battery 1 and the manufacturing method for the battery 1 are explained. Effects concerning welding of the positive electrode tab 11b and the positive electrode current collection plate 21 are mainly explained below. The effects concerning the welding of the positive electrode tab 11b and the positive electrode current collection plate 21 and effects concerning the welding of the negative electrode tab 12b and the negative electrode current collection plate 22 are the same.

In the battery 1, the electrode tabs (the positive electrode tab 11b and the negative electrode tab 12b) and the convex joining sections (the positive electrode joining section 21f and the negative electrode joining section 22f) of the current collector 20 (the positive electrode current collection plate 21 and the negative electrode current collection plate 22) are welded. In the manufacturing method for the battery 1, the electrode tabs (the positive electrode tab 11b and the negative electrode tab 12b) and the convex joining sections (the positive electrode joining section 21f and the negative electrode joining section 22f) are brought into contact and welded. With such a configuration, the positive electrode tab 11b and the positive electrode joining section 21f of the positive electrode current collection plate 21 can be sufficiently welded to each other in a state in which the positive electrode tab 11b and the positive electrode joining section 21f of the positive electrode current collection plate 21 are sufficiently set in contact. That is, for example, when the positive electrode joining section 21f, which is a welding region, projects from the positive electrode current collection plate 21 as in the first embodiment, compared with when a welding region does not project from a positive electrode current collection plate as in the related art, it is easy to bring the positive electrode tab 11b and the positive electrode joining section 21f into contact to adhere. Therefore, for example, it is possible to sufficiently weld and electrically conduct the positive electrode tab 11b and the positive electrode joining section 21f. Therefore, for example, it is possible to increase conductivity of the positive electrode tab 11b and the positive electrode current collection plate 21. In the manufacturing method for the battery 1, for example, it is possible to suppress a welding failure of the positive electrode tab 11b and the positive electrode current collection plate 21 and improve productivity and a yield of the battery 1.

The positive electrode tab 11b deformed into the convex shape along the positive electrode joining section 21f of the positive electrode current collection plate 21 and the positive electrode joining section 21f are welded. With such a configuration, by bringing the positive electrode tab 11b and the positive electrode joining section 21f into contact to adhere along the convex positive electrode joining section 21f as shown in Figure 21, it is possible to sufficiently secure weldable regions in the positive electrode tab 11b and the positive electrode joining section 21f. That is, the positive electrode tab 11b can be welded in an adhering state to the positive electrode joining section 21f in any portion deformed into the convex shape. Note that, although the positive electrode tab 11b is deformed into the convex shape in Figure 10, a region other than a welded region sometimes hangs down in the Z-axis negative direction with the own weight of the positive electrode tab 11b. The positive electrode tab 11b is deformed into the convex shape at the time of the welding to the positive electrode joining section 21f shown in Figure 21. However, the deformation into the convex shape is sometimes eliminated in the disposition of the battery 1 shown in Figure 1 in which the top and the bottom are inverted from Figure 21. That is, a portion of the positive electrode tab 11b other than a portion welded to the positive electrode joining section 21f sometimes hangs down in the Z-axis negative direction after the state shown in Figure 21 is vertically reversed into the state shown in Figure 1.

The positive electrode tab 11b and the distal end of the positive electrode joining section 21f of the positive electrode current collection plate 21 are welded. With such a configuration, in the battery 1, the positive electrode tab 11b and the positive electrode current collection plate 21 can be sufficiently conducted by a minimum welding area. On the other hand, a configuration may be adopted in which the positive electrode tab 11b and one slope of facing two inclined surfaces of the positive electrode joining section 21f are welded. A configuration may be adopted in which the positive electrode tab 11b and the entire surface from the proximal end of the positive electrode joining section 21f to the distal end in the Z-axis negative direction are welded.

The positive electrode joining section 21f of the positive electrode current collection plate 21 has higher rigidity in the stacking direction of the positive electrode tab 11b and the positive electrode current collection plate 21 than the positive electrode tab 11b. With such a configuration, it is possible to deform the positive electrode tab 11b along the shape of the positive electrode joining section 21f and weld the positive electrode tab 11b to the positive electrode joining section 21f in an adhering state. Therefore, it is possible to sufficiently conduct the positive electrode tab 11b and the positive electrode current collection plate 21.

The positive electrode tab 11b and the positive electrode joining section 21f of the positive electrode current collection plate 21 are welded by the laser beam L1. In the manufacturing method for the battery 1, laser welding can be applied. It is unnecessary to directly caulk or crimp to join the welding region of the positive electrode tab 11b and the positive electrode joining section 21f in order to sufficiently join the positive electrode tab 11b and the positive electrode joining section 21f. That is, in the first embodiment, since the joining portion of the positive electrode tab 11b and the positive electrode joining section 21f can be exposed, the positive electrode tab 11b and the positive electrode joining section 21f can be laser-welded. As explained above, in the first embodiment, it is possible to weld the positive electrode tab 11b and the positive electrode joining section 21f with the laser welding that has high versability and can easily change welding conditions.

As shown in Figure 8, the positive electrode tab 11b projects from the side edge 11c of the positive electrode current collection layer 11S. With such a configuration, it is possible to sufficiently weld the positive electrode tab 11b and the positive electrode joining section 21f while preventing the positive electrode tab 11b and the positive electrode current collection layer 11S and the positive electrode active material layer 11T from interfering.

The positive electrode joining section 21f of the positive electrode current collection plate 21 extends in the longitudinal direction of the charge/discharge body 10 having the rectangular parallelepiped shape (the X-axis direction) while facing the charge/discharge body 10. With such a configuration, it is possible to sufficiently secure the welding region of the positive electrode tab 11b and the positive electrode joining section 21f in the longitudinal direction of the charge/discharge body 10 (the X-axis direction).

The battery 1 includes the container 51 that houses the charge/discharge body 10 and has conductivity and the insulation cover 61 that insulates the positive electrode tab 11b and the negative electrode tab 12b. With such a configuration, it is possible to sufficiently insulate the container 51 and the positive electrode tab 11b with the insulation cover 61. In particular, when the positive electrode tab 11b is configured long to secure a work space in order to make it easy to weld the positive electrode tab 11b and the positive electrode joining section 21f, thereafter, in a state in which the lid 52 is attached to the container 51, the positive electrode tab 11b sometimes greatly bends on the inside of the container 51. Even when the positive electrode tab 11b bends, it is possible to sufficiently insulate the container 51 and the positive electrode tab 11b with the insulation cover 61.

The positive electrode joining section 21f of the positive electrode current collection plate 21 is formed in a triangular shape. With such a configuration, it is possible to concentrate stress on the positive electrode tab 11b and corner portions (tip portions) of the triangular shape of the positive electrode joining section 21f and bring the positive electrode tab 11b and the positive electrode joining section 21f into contact to sufficiently adhere to each other. Therefore, it is possible to sufficiently join the positive electrode joining section 21f and the positive electrode tab 11b.

The charge/discharge body 10 is configured by the positive electrode 11 and the negative electrode 12 being wound via the separators 13. As explained in the first embodiment, the battery 1 can be applied to a battery including the charge/discharge body 10 of a winding type.

In the manufacturing method for the battery 1, the positive electrode tab 11b and both the ends of the convex positive electrode joining section 21f of the positive electrode current collection plate 21 are pressed against each other using the first pressing member 501 and the second pressing member 502. With the manufacturing method for the battery 1 having such a configuration, even if the positive electrode tab 11b and the positive electrode joining section 21f are not directly pressed, it is possible to bring the positive electrode tab 11b and the positive electrode joining section 21f into contact in a state in which the positive electrode tab 11b and the positive electrode joining section 21f sufficiently adhere. When the negative electrode tab 12b is pressed along the sides of both the ends (the sides of both the ends in the Y-axis direction) of the negative electrode joining section 22f in a state in which the negative electrode tab 12b is set in contact with the negative electrode joining section 22f as shown in Figure 21, tension in both positive and negative directions of the Y axis centering on the negative electrode joining section 22f is applied to the negative electrode tab 12b. As a result, the negative electrode tab 12b and the negative electrode joining section 22f of the negative electrode current collection plate 22 come into contact in an adhering state. Therefore, it is possible to sufficiently weld the positive electrode tab 11b and the positive electrode joining section 21f.

The effects concerning the first embodiment are explained above using the configuration of the welding of the positive electrode tab 11b and the positive electrode current collection plate 21. In the first embodiment, the effects concerning the welding of the negative electrode tab 12b and the negative electrode current collection plate 22 are the same as the effects concerning the welding of the positive electrode tab 11b and the positive electrode current collection plate 21 explained above.

### (Configurations and effects in modification 1 to modification 3 of battery 1 in first embodiment)

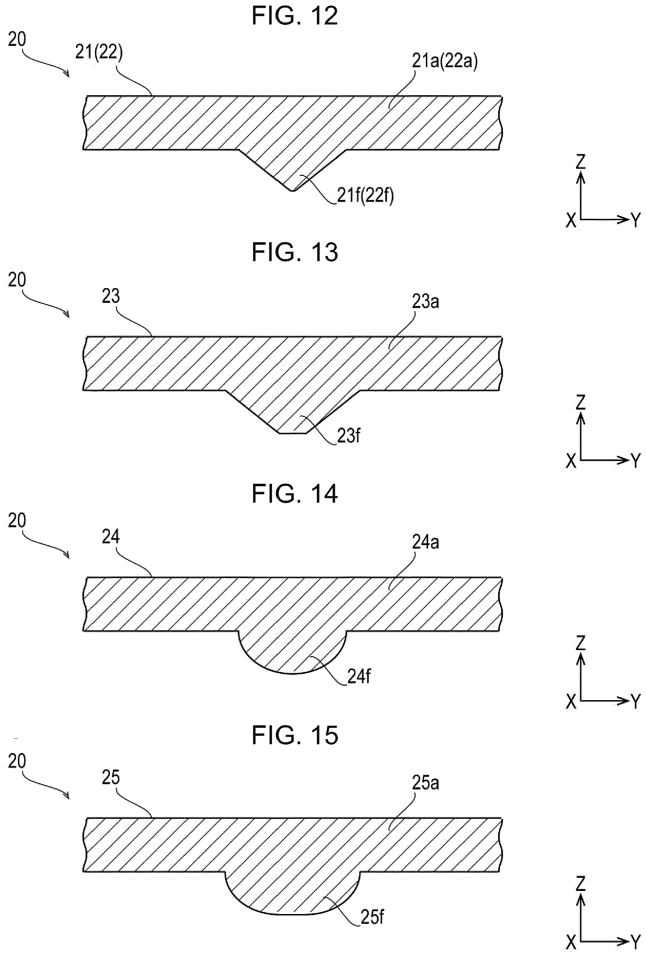

Joining sections of current collection plates in a modification 1 to a modification 3 of the battery 1 in the first embodiment are explained with reference to Figure 13 to Figure 15. A modification of the positive electrode joining section 21f of the positive electrode current collection plate 21 is explained below. A modification of the negative electrode joining section 22f of the negative electrode current collection plate 22 is the same as the modification of the positive electrode joining section 21f of the positive electrode current collection plate 21. Therefore, explanation of the modification of the negative electrode joining section 22f of the negative electrode current collection plate 22 is omitted.

As shown in Figure 13, a joining section 23f of a positive electrode current collection plate 23 is formed in a trapezoidal shape projecting in the Z-axis negative direction with a portion in contact with a first base 23a set as a bottom side. Cross sections in the Y-axis direction and the Z-axis direction of the joining section 23f form a trapezoidal shape tapered in the Z-axis negative direction. The joining section 23f extends in the X-axis direction. The distal end of the joining section 23f is formed as a plane that is parallel to the first base section 23a. Both ends in the Y-axis direction of the joining section 23f are formed as inclined surfaces inclining toward the first base section 23a. With such a configuration, since the welding region to the positive electrode tab 11b can be sufficiently secured by the plane portion of the distal end of the joining section 23f, it is possible to sufficiently join the joining section 23f and the positive electrode tab 11b.

As shown in Figure 14, a joining section 24f of a positive electrode current collection plate 24 is formed in, with portions in contact with a first base 24a as a starting point, an arcuate shape projecting in the Z-axis negative direction. Cross sections in the Y-axis direction and the Z-axis direction of the joining section 24f form an arcuate shape. The joining section 24f extends in the X-axis direction. The joining section 24f is formed in a semicircular shape from the first base 24a toward a distal end projecting in the Z-axis negative direction. The joining section 24f may be formed in a semielliptical shape or may be formed in a semi-paraboloidal shape. With such a configuration, since an inflection point in a contact portion with the positive electrode tab 11b can be eliminated by the arcuate joining section 24f, it is possible to sufficiently join the joining section 24f and the positive electrode tab 11b while suppressing a load applied to the positive electrode tab 11b.

As shown in Figure 15, a joining section 25f of a positive electrode current collection plate 25 is formed in, with portions in contact with a first base 25a as a starting point, an arcuate shape projecting in the Z-axis negative direction. The distal end of the joining section 25f is formed as a plane parallel to the first base 25a. Cross sections in the Y-axis direction and the Z-axis direction of the joining section 25f form an arcuate shape including a plane at a distal end. The joining section 25f extends in the X-axis direction. With such a configuration, since the welding region to the positive electrode tab 11b can be sufficiently secured by the plane portion of the distal end of the joining section 25f, it is possible to sufficiently join the joining section 25f and the positive electrode tab 11b. Further, with such a configuration, it is possible to reduce a load applied to the positive electrode tab 11b with an arcuate portion around the distal end of the joining section 25f.

### [Second Embodiment]

### (Configuration of battery 2 and manufacturing method for battery 2 in second embodiment)

A configuration of a battery 2 is explained with reference to Figure 22 and Figure 23.

The battery 2 in a second embodiment is configured by a plurality of electrode tabs being bound. In the battery 2 in the second embodiment, the same reference numerals and signs are added to the same components as the components of the battery 1 in the first embodiment and explanation of the components is omitted. In the second embodiment, components different from the components in the first embodiment are mainly explained. In explanation of a manufacturing method for the battery 2 in the second embodiment, only a manufacturing process specific to the battery 2 is explained. Explanation of the same manufacturing process as the manufacturing process for the general battery is omitted.

Unlike the battery 1 in the first embodiment, the battery 2 in the second embodiment includes a charge/discharge body 210 instead of the charge/discharge body 10. The charge/discharge body 210 includes one side section 210a from which a positive electrode tab 211b and a negative electrode tab 212b project, the other side section 210b facing the one side section 210a, and an outer peripheral section 210c located between the one side section 210a and the other side section 210b. The charge/discharge body 210 is configured by a winding type in which a positive electrode 211 and a negative electrode 212 are stacked via a separator 13 and wound. A plurality of negative electrode tabs 212b are formed in the negative electrode 212. The negative electrode joining section 22f has higher rigidity in a stacking direction of the negative electrode tabs 212b and the negative electrode current collection plate 22 (the Z-axis direction) than the plurality of negative electrode tabs 212b in a bound state. As shown in Figure 23, the plurality of negative electrode tabs 212b are welded to, in the bound state, the negative electrode joining section 22f of the negative electrode current collection plate 22. A configuration of a plurality of positive electrode tabs 211b is the same as the configuration of the plurality of negative electrode tabs 212b.

The manufacturing method for the battery 2 in the second embodiment is the same as the manufacturing method for the battery 1 in the first embodiment. However, in the first step, the plurality of negative electrode tabs 212b in the bound state and the negative electrode joining section 22f of the negative electrode current collection plate 22 are brought into contact. Similarly, in the first step, the plurality of positive electrode tabs 211b in the bound state and the positive electrode joining section 21f of the positive electrode current collection plate 21 are brought into contact.

### (Effects of the battery 2 in the second embodiment)

Effects of the battery 2 and the manufacturing method for the battery 2 are explained. Effects concerning the welding of the negative electrode tab 212b and the negative electrode current collection plate 22 are mainly explained below. The effects concerning the welding of the negative electrode tab 212b and the negative electrode current collection plate 22 and effects concerning welding of the positive electrode tab and the positive electrode current collection plate 21 are the same. The battery 2 achieves the following effects in addition to the effects of the battery 1 in the first embodiment.

The bound plurality of negative electrode tabs 212b and the negative electrode joining section 22f of the negative electrode current collection plate 22 are welded. Even with such a configuration, it is possible to directly or indirectly weld all of the plurality of negative electrode tabs 212b and the negative electrode joining section 22f without causing a gap between the negative electrode tabs 212b adjacent to each other. That is, since the negative electrode joining section 22f, which is the welding region, projects from the negative electrode current collection plate 22, compared with when the welding region does not project from the negative electrode current collection plate as in the related art, it is easy to bring all of the plurality of negative electrode tabs 212b and the negative electrode joining section 22f into contact to directly or indirectly adhere. Therefore, it is possible to sufficiently conduct all of the plurality of negative electrode tabs 212b and the positive electrode joining section 21f.

The negative electrode joining section 22f of the negative electrode current collection plate 22 has higher rigidity in a stacking direction of the negative electrode tab 212b and the negative electrode current collection plate 22 (the Z-axis direction) than the bound plurality of negative electrode tabs 212b. With such a configuration, even if the plurality of negative electrode tabs 212b are bound, it is possible to deform all of the plurality of negative electrode tabs 212b along the shape of the negative electrode joining section 22f of the negative electrode current collection plate 22 and weld the plurality of negative electrode tabs 212b in a state in which the plurality of negative electrode tabs 212b directly or indirectly adhere to the negative electrode joining section 22f. Therefore, it is possible to sufficiently conduct all of the negative electrode tabs 212b and the negative electrode current collection plate 22.

The effects concerning the second embodiment are explained above using the configuration of the welding of the bound plurality of negative electrode tabs 212b and the negative electrode current collection plate 22. In the second embodiment, effects concerning welding of a bound plurality of positive electrode tabs and the positive electrode current collection plate 21 are the same as the effects concerning the welding of the bound plurality of negative electrode tabs 212b and the negative electrode current collection plate 22 explained above.

### [Third Embodiment]

### (Configuration of battery 3 and manufacturing method for battery 3 in third embodiment)

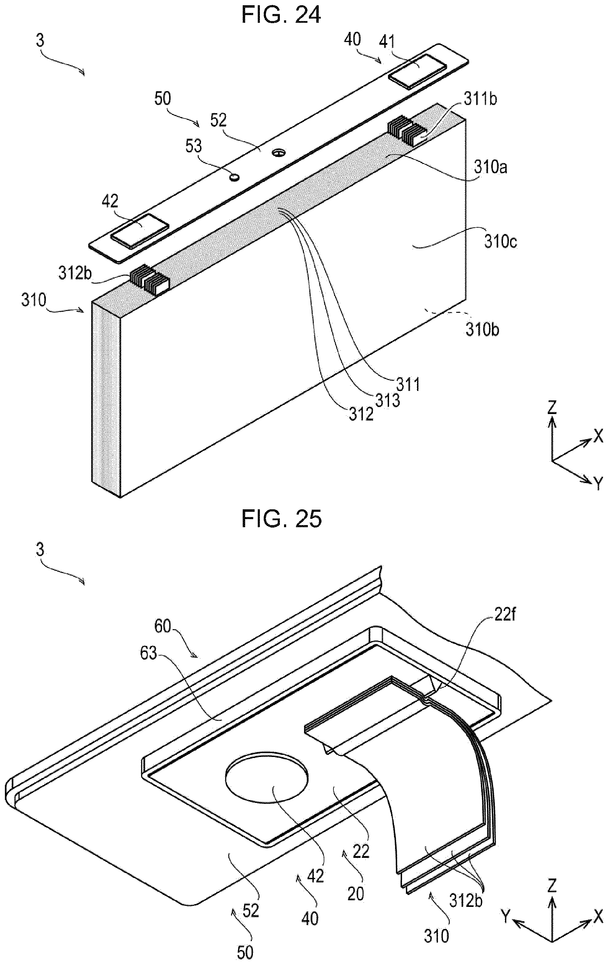

A configuration of a battery 3 is explained with reference to Figure 24 and Figure 25.

The battery 3 in a third embodiment is configured by a stacked type in which a charge/discharge body 310 is not wound. In the battery 3 in the third embodiment, the same reference numerals and signs are added to the same components as the components of the battery 1 in the first embodiment and explanation of the components is omitted. In the third embodiment, components different from the components in the first embodiment are mainly explained. In explanation of a manufacturing method for the battery 3 in the third embodiment, only a manufacturing process specific to the battery 3 is explained. Explanation of the same manufacturing process as the manufacturing process for the general battery is omitted.

Unlike the battery 1 in the first embodiment, the battery 3 in the third embodiment includes the charge/discharge body 310 instead of the charge/discharge body 10. The charge/discharge body 310 includes one side section 310a from which a positive electrode tab 311b and a negative electrode tab 313b project, the other side section 310b facing the one side section 310a, and an outer peripheral section 310c located between the one side section 310a and the other side section 310b. The charge/discharge body 310 is configured by a stacked type in which a positive electrode 311 and a negative electrode 312 are stacked via a separator 313. The charge/discharge body 310 is configured by pluralities of positive electrodes 311, separators 313, and negative electrodes 312 respectively formed in rectangular shapes being stacked in the order of the positive electrode 311, the separator 313, the negative electrode 312, and the separator 313. In each of the positive electrodes 311, one positive electrode tab 311b is formed. In each of the negative electrodes 312, one negative electrode tab 312b is formed. The negative electrode joining section 22f has higher rigidity in a stacking direction of negative electrode tabs 312b and the negative electrode current collection plate 22 (the Z-axis direction) than a plurality of negative electrode tabs 312b in a bound state. As shown in Figure 25, the plurality of negative electrode tabs 312b are welded to, in the bound state, the negative electrode joining section 22f of the negative electrode current collection plate 22. A configuration of a plurality of positive electrode tabs 311b is the same as the configuration of the plurality of negative electrode tabs 312b.

As a modification of the charge/discharge body 310, it is possible to adopt a stacked type in which a plurality of positive electrodes and a plurality of negative electrodes formed relatively short with respect to one separator formed long are alternately provided while being caused to face via the separator. This modification is a so-called Z-fold stacked type. In the charge/discharge body having such a configuration, the separator is folded and stacked, whereby the positive electrodes and the negative electrodes face via the separator.

The manufacturing method for the battery 3 in the third embodiment is the same as the manufacturing method for the battery 1 in the first embodiment. However, in the first step, the plurality of positive electrode tabs 311b in the bound state and the positive electrode joining section 21f of the positive electrode current collection plate 21 are brought into contact. Similarly, in the first step, the plurality of negative electrode tabs 312b in the bound state and the negative electrode joining section 22f of the negative electrode current collection plate 22 are brought into contact.

### (Effects of battery 3 in third embodiment)

Effects of the battery 3 in the third embodiment are explained. In the battery 3 in the third embodiment, the charge/discharge body 310 of the stacked type configured by the positive electrode 311 and the negative electrode 312 being stacked via the separator 313 is provided. The charge/discharge body 310 is configured by the pluralities of positive electrodes 311, separators 313, and negative electrodes 312 respectively formed in the rectangular shapes being stacked in the order of the separator 313, the negative electrode 312, and the separator 313. That is, like the battery 2 in the second embodiment, the battery 3 in the third embodiment is configured by a plurality of electrode tabs being bound. Even with such a configuration, it is possible to directly or indirectly weld all of the plurality of electrode tabs and a joining section without causing a gap between the electrode tabs adjacent to each other. Therefore, it is possible to sufficiently conduct all of the plurality of electrode tabs and the joining section.

### [Fourth Embodiment]

### (Configuration of battery 4 and manufacturing method for battery 4 in fourth embodiment)

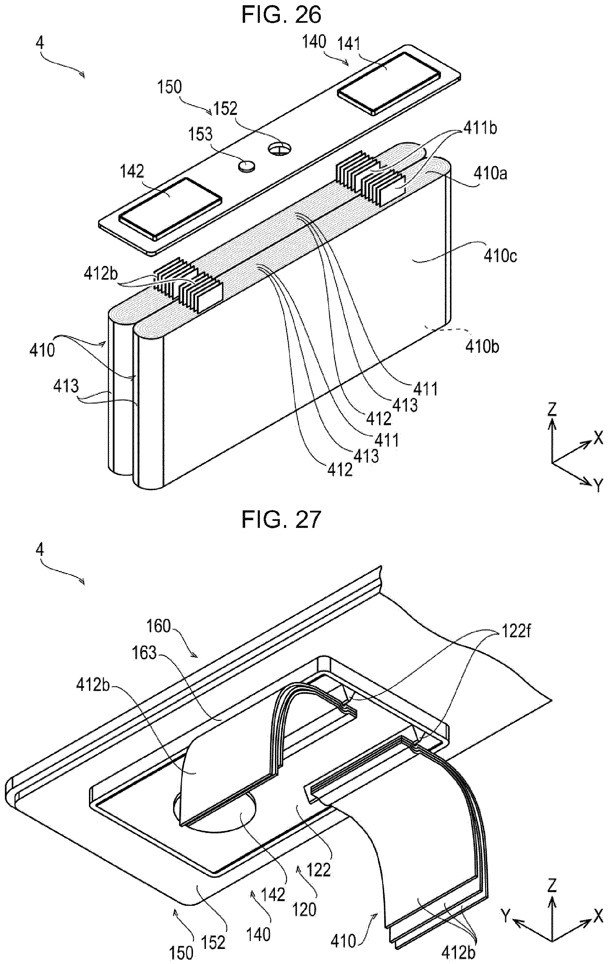

A configuration of a battery 4 is explained with reference to Figure 26 and Figure 27.

The battery 4 in a fourth embodiment is configured by two charge/discharge bodies 410 being disposed side by side. In the battery 4 in the fourth embodiment, the same reference numerals and signs are added to the same components as the components of the battery 1 in the first embodiment and explanation of the components is omitted. In the fourth embodiment, components different from the components in the first embodiment are mainly explained. In explanation of a manufacturing method for the battery 4 in the fourth embodiment, only a manufacturing process specific to the battery 4 is explained. Explanation of the same manufacturing process as the manufacturing process for the general battery is omitted.

Unlike the battery 1 in the first embodiment, the battery 4 in the fourth embodiment includes the two charge/discharge bodies 410 instead of the charge/discharge body 10. The charge/discharge body 410 includes one side section 410a from which a positive electrode tab 411b and a negative electrode tab 412b project, the other side section 410b facing the one side section 410a, and an outer peripheral section 410c located between the one side section 410a and the other side section 410b. The two charge/discharge bodies 410 are disposed side by side in the latitudinal direction of the battery 4 (the Y-axis direction). For example, the two charge/discharge bodies 410 are electrically connected in parallel. The charge/discharge body 410 is configured by a winding type in which a positive electrode 411 and a negative electrode 412 are stacked via a separator 413 and wound. A plurality of positive electrode tabs 411b are formed in the positive electrode 411. A plurality of negative electrode tabs 412b are formed in the negative electrode 412. A positive electrode current collection plate 121 and a negative electrode current collection plate 122 of a current collector 120, a positive electrode terminal 141 and a negative electrode terminal 142 of an external terminal 140, a container and a lid 152 of an exterior body 150, a negative electrode side first insulation plate 163 and the like of an insulator 160, and a sealing body are configured longer in the latitudinal direction (the Y-axis direction) compared with those of the battery 1. By adopting such a configuration, each of the constituent members of the battery 4 is adjusted to a size of the two charge/discharge bodies 410 disposed side by side in the latitudinal direction of the battery 4 (the Y-axis direction).

In the negative electrode current collection plate 122, for example, two negative electrode joining sections 122f are formed to be separated in the latitudinal direction of the battery 4 (the Y-axis direction). Each of the negative electrode joining sections 122f is formed in a triangular shape. Each of the negative electrode joining sections 122f extends in the longitudinal direction of the charge/discharge body 410 (the X-axis direction) while facing the charge/discharge body 410. A plurality of negative electrode tabs 412b respectively provided in the two charge/discharge bodies 410 are bound and joined to one negative electrode joining section 122f located relatively near of the two negative electrode joining sections 122f formed on the negative electrode current collection plate 122. A configuration of joining of a positive electrode current collection plate and the plurality of positive electrode tabs 411b is the same as the configuration of the negative electrode current collection plate 122 and the plurality of negative electrode tabs 412b.

A manufacturing method for the battery 4 in the fourth embodiment is the same as the manufacturing method for the battery 1 in the first embodiment. However, in the first step, the plurality of negative electrode tabs 412b in a bound state and one negative electrode joining section 122f formed on the negative electrode current collection plate 122 are brought into contact. Similarly, in the first step, the plurality of positive electrode tabs 411b in a bound state and one negative electrode joining section 122f formed on the positive electrode current collection plate 21 are brought into contact.

### (Effects of battery 4 in fourth embodiment)

Effects of the battery 4 in the fourth embodiment are explained. In the battery 4 in the fourth embodiment, the two charge/discharge bodies 410 of the winding type are provided side by side in the latitudinal direction of the battery 4 (the Y-axis direction). Here, for example, in the negative electrode current collection plate 122, the two negative electrode joining sections 122f are formed to be separated in the latitudinal direction of the battery 4 (the Y-axis direction). Therefore, the plurality of negative electrode tabs 412b respectively provided in the two charge/discharge bodies 410 can be bound and joined to one negative electrode joining section 122f located relatively near of the two negative electrode joining sections 122f formed on the negative electrode current collection plate 122. For the positive electrode current collection plate, the same effects as the effects of the negative electrode current collection plate 122 explained above are achieved.

As a modification of the fourth embodiment, three or more charge/discharge bodies may be provided side by side in the latitudinal direction of the battery 4 (the Y-axis direction). In this case, three or more joining sections are formed to be separated in the latitudinal direction of the battery (the Y-axis direction).

The battery of the present invention is not limited to the configurations described in the embodiments and can be configured as appropriate based on the contents described in the claims.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. Each of the embodiments is explained in detail or simply in order to clearly explain the present invention and does not always need to include all the components explained above and may include not-shown components. A part of components in a certain embodiment may be deleted, substituted by components in other embodiments, or combined with components in the other embodiments.

### Reference Signs List

1, 2, 3, 4 battery, 10, 110, 210, 310, 410 charge/discharge body, 11, 111, 211, 311, 411 positive electrode (electrode), 11S positive electrode current collection layer (current collection layer), 11b positive electrode tab (electrode tab), 11c side edge, 12, 212, 312, 412 negative electrode (electrode), 12S negative electrode current collection layer (current collection layer), 12b negative electrode tab (electrode tab), 12c side edge, 21 positive electrode current collection plate (current collector), 21f positive electrode joining section (joining section), 22 negative electrode current collection plate (current collector), 22f negative electrode joining section (joining section), 51 container, 61 insulation cover (insulator), 122 negative electrode current collection plate (current collector), 122f negative electrode joining section (joining section), 501 first pressing member (pressing member), 502 second pressing member (pressing member), L1 laser beam.

## Claims

1. A battery comprising:
a charge/discharge body including an electrode including an electrode tab; and
a current collector joined to the electrode tab, wherein
the current collector includes a convex joining section, and
the electrode tab and the joining section are welded.

2. The battery according to claim 1, wherein the electrode tab deformed into a convex shape along the joining section and the joining section are welded.

3. The battery according to claim 1 or 2, wherein the electrode tab and at least a distal end of the joining section are welded.

4. The battery according to any one of claims 1 to 3, wherein the joining section has higher rigidity in a stacking direction of the electrode tab and the current collector than the electrode tab.

5. The battery according to any one of claims 1 to 4, wherein a bound plurality of the electrode tabs and the joining section are welded.

6. The battery according to claim 5, wherein the joining section has higher rigidity in a stacking direction of the electrode tab and the current collector than the bound plurality of electrode tabs.

7. The battery according to any one of claims 1 to 6, wherein the electrode tab and the joining section are welded by a laser beam.

8. The battery according to any one of claims 1 to 7, wherein the electrode tab is formed to project from a side edge of a current collection layer of the electrode.

9. The battery according to any one of claims 1 to 8, wherein
the charge/discharge body is formed in a rectangular parallelepiped shape, and
the joining section of the current collector extends in a longitudinal direction of the charge/discharge body while facing the charge/discharge body.

10. The battery according to any one of claims 1 to 9, further comprising:
a container that houses the charge/discharge body and has conductivity; and
an insulator that insulates the container and the electrode tab.

11. The battery according to any one of claims 1 to 10, wherein the joining section has any one shape among a triangular shape, a trapezoidal shape, an arcuate shape, and an arcuate shape having a flat section at a tip.

12. The battery according to any one of claims 1 to 11, wherein the charge/discharge body is configured by a positive electrode and a negative electrode being wound or stacked via an insulation member.

13. A manufacturing method for a battery, the battery including:
a charge/discharge body including an electrode including an electrode tab; and
a current collector joined to the electrode tab,
the current collector including a convex joining section,
the electrode tab and the joining section being welded,
the manufacturing method for the battery comprising:
a first step of bringing the electrode tab and the joining section into contact; and
a second step of welding the electrode tab and the current collector.

14. The manufacturing method for the battery according to claim 13, wherein welding by a laser beam is performed in the second step.

15. The manufacturing method for the battery according to claim 13 or 14, wherein, in the first step, the electrode tab and sides of both ends of the joining section of the current collector are pressed against each other using a pressing member.
